# EUROPEAN PATENT APPLICATION

(11) **EP 4 821 726 A1**
(43) Date of publication of application: **14.10.2026**
(21) Application number: 25168923.8
(22) Date of filing: 07.04.2025
(51) Int. Cl.: B60K 6/52, B60G 11/27, B60G 17/015, B60G 17/016, B60G 17/0165, B60W 10/20, B60W 10/22, B60W 30/02, B60W 40/13, B60W 50/00, B60G 21/00, B60W 30/04, B60W 30/045, B60W 50/14

(54) **PREDICTIVE TRACTION AND STEERING CONTROL SYSTEM FOR VEHICLES**

(71) Applicant: Volvo Truck Corporation, 405 08 Göteborg (SE)
(72) Inventor: CHOUDHARY, Mukesh, GÖTEBORG (SE); MAPARI, Aditya, GÖTEBORG (SE); OSCARSSON, Christian, STENUNGSUND (SE)
(74) Representative: Ström & Gulliksson AB

(57) **Abstract**

A computer system (900) comprising processing circuitry (902) configured for predictive traction control of a vehicle (10) the processing circuitry further being configured to: obtain current vehicle state data (110) of the vehicle (10); obtain road data (120), predict vertical loads (134) on at least one wheel and/or axle of the vehicle (10), determine global forces (136), determine a plurality of possible electronically controlled suspension (ECS) settings (140), determine a matrix (145) of traction and steering capabilities for the plurality of ECS-settings (140), and determine a suitable action (150) to be carried out by the vehicle (10) in order to achieve a balance between traction and steering capabilities for the upcoming road section (53), wherein the determination is based on the matrix (145) of traction and steering capabilities and the determined global forces (136).

## Description

### TECHNICAL FIELD

The disclosure relates generally to a control system for a vehicle. In particular aspects, the disclosure relates to a predictive traction and steering control system for vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In modern vehicle systems, maintaining optimal traction and steering capabilities is important, especially under varying road conditions. Traditional systems often rely on reactive measures that adjust suspension settings based on immediate feedback which can lead to suboptimal performance, particularly in challenging driving scenarios such as steep inclines, sharp turns, and slippery surfaces. Moreover, this may result in inefficiencies and increased tire wear during complex maneuvers.

Existing solutions fail to comprehensively balance traction and steering capabilities across diverse road conditions. They do not sufficiently predict and adapt to the dynamic forces encountered during vehicle operation, resulting in decreased performance, increased component wear, and reduced safety. Enhancements are necessary to address these shortcomings and improve vehicle control, safety, and efficiency in a predictive manner.

### SUMMARY

A vehicle on the road will encounter different road profiles as well as different road conditions. Differential locking/unlocking is one way to manage the road-wheel interaction capability of the vehicle during these different road profiles and conditions. Today, the control of differential locking/unlocking is often performed manually, relying heavily on driver experience. Automatic solutions exists, but are reactive and acts when wheel slip has already been detected. Road-wheel interaction capability is further affected by the vertical load on wheels and axles, which is controlled by an electronically controlled air suspension system (ECS). The ECS may control the vertical loads for example such that they are equal on driven wheels, or such that a single axle has a maximum vertical load. Non-driven axles may also be lifted to improve the vertical loads on driven axles. However, controlling vertical loads to improve traction can lead to reduced steering capabilities. Consequently, a solution for providing a balance between traction and steering that is predictive instead of reactive is needed.

According to a first aspect of the disclosure, a computer system comprising processing circuitry configured for predictive traction control of a vehicle comprising at least two rear axles with electronically controlled air suspension, the processing circuitry further being configured to: obtain current vehicle state data of the vehicle; obtain road data, wherein the road data is relating to an upcoming road section that the vehicle intends to travel during a prediction horizon; predict vertical loads on at least one wheel and/or axle of the vehicle for the upcoming road section that the vehicle intends to travel during the prediction horizon, wherein the prediction is based on the obtained vehicle state data and road data; determine global forces required for the upcoming road section that the vehicle intends to travel during the prediction horizon; determine a plurality of possible electronically controlled suspension settings; determine a matrix of traction and steering capabilities for the plurality of ECS-settings, wherein said determination is at least based on the predicted vertical loads and the road data, and determine a suitable action to be carried out by the vehicle in order to achieve a balance between traction and steering capabilities for the upcoming road section, wherein the determination is based on the matrix of traction and steering capabilities and the determined global forces. The first aspect of the disclosure may seek to address the limitations of traditional vehicle systems by providing a predictive traction control system that optimizes the balance between traction and steering capabilities, thereby enhancing vehicle performance and safety under varying road conditions. A technical benefit may include improving vehicle control and efficiency by predicting and adapting electronically controlled suspension settings to dynamic road conditions, thereby reducing tire wear and enhancing safety compared to existing reactive systems.

Optionally in some examples, including in at least one preferred example, the road data comprises information relating to the road profile and road condition of the upcoming road section. A technical benefit may include improving the system's ability to adapt to diverse road conditions, enhancing overall vehicle stability and safety.

Optionally in some examples, including in at least one preferred example, the vertical loads are predicted on each wheel and/or axle. A technical benefit may include optimizing vehicle handling and reducing wear by ensuring balanced load distribution.

Optionally in some examples, including in at least one preferred example, the determination of global forces is at least based on the road data. A technical benefit may include enhancing the precision of force calculations, providing better traction and control.

Optionally in some examples, including in at least one preferred example, the processing circuitry further is configured to predict a longitudinal acceleration request for the upcoming road section during the prediction horizon, wherein said prediction is at least based on current vehicle state data and road data. A technical benefit may include improving fuel efficiency and acceleration smoothness by anticipating driving needs.

Optionally in some examples, including in at least one preferred example, the prediction of the longitudinal acceleration request is obtained by a driver model. A technical benefit may include offering personalized driving experiences that enhance comfort and performance.

Optionally in some examples, including in at least one preferred example, the determination of the global forces are at least based on the predicted longitudinal acceleration request. A technical benefit may include ensuring that force distribution aligns with anticipated driving demands, improving vehicle responsiveness.

Optionally in some examples, including in at least one preferred example, continuously update the matrix of traction and steering capabilities. A technical benefit may include maintaining optimal vehicle performance through real-time adaptability to changing conditions.

Optionally in some examples, including in at least one preferred example, transmitting information to a user of the vehicle regarding the determined action. A technical benefit may include enhancing driver awareness and decision-making by providing timely feedback.

Optionally in some examples, including in at least one preferred example, determining the suitable action using the matrix further comprises determining the optimal action by analyzing energy use, wear of components of the vehicle, or a combination of both. A technical benefit may include reducing operational costs and extending vehicle longevity through informed decision-making.

Optionally in some examples, including in at least one preferred example, the plurality of possible ECS-settings each describe different approaches to axle load distribution. A technical benefit may include allowing for customized load configurations that improve traction and handling.

Optionally in some examples, including in at least one preferred example, the road data is obtained through one or more of ADASIS, recorded road information, data from vehicles traveling ahead, cameras, or sensors mounted on the vehicle. A technical benefit may include enhancing the accuracy of road condition predictions, leading to better vehicle adaptability.

Optionally in some examples, including in at least one preferred example, selecting optimum loads on axles of the vehicle using the determined ECS settings. A technical benefit may include improving traction and steering balance by optimizing axle loads.

Optionally in some examples, including in at least one preferred example, redistributing axle loads on at least one wheel and/or axle of the vehicle. A technical benefit may include enhancing vehicle handling and reducing the risk of wheel slip.

Optionally in some examples, including in at least one preferred example, the action is aimed at preventing wheel slip of the vehicle. A technical benefit may include increasing safety by proactively managing traction under challenging conditions.

Optionally in some examples, including in at least one preferred example, the action comprises causing a mechanism of the vehicle to lift non-driven axles. A technical benefit may include enhancing traction on driven wheels and reducing tire wear on non-driven axles.

According to a second aspect of the disclosure, a vehicle comprising the computer system of the first aspect is provided. The second aspect of the disclosure may seek to integrate advanced predictive traction control systems into vehicles, addressing the challenge of maintaining optimal performance across varying conditions. A technical benefit may include providing vehicles with enhanced adaptability and safety features through the integration of sophisticated control systems.

Optionally in some examples, including in at least one preferred example, further comprising a differential lock mechanism configured to selectively engage or disengage differentials. A technical benefit may include enhancing vehicle traction and stability by providing improved control over wheel slip and power distribution, particularly in challenging driving conditions such as off-road or slippery surfaces.

According to a third aspect of the disclosure, computer-implemented method for predictive traction control of a vehicle is provided. The method comprising: obtaining, by processing circuitry of a computer system, road data, wherein the road data is relating to an upcoming road section that the vehicle intends to travel during a prediction horizon; obtaining, by processing circuitry of a computer system, current vehicle state data of the vehicle; predicting, by the processing circuitry, vertical loads on at least one wheel and/or axle of the vehicle for the upcoming road section that the vehicle intends to travel during the prediction horizon, wherein the prediction is based on the obtained vehicle state data and road data; determine, by the processing circuitry, global forces required for the upcoming road section that the vehicle intends to travel during the prediction horizon; determining, by the processing circuitry, a plurality of possible electronically controlled suspension settings; determining, by the processing circuitry, a matrix of traction and steering capabilities for the plurality of ECS-settings, wherein said determination is at least based on the predicted vertical loads and the road data; and determining, by the processing circuitry, a suitable action to be carried out by the vehicle in order to achieve a balance between traction and steering capabilities for the upcoming road section, wherein the determination is based on the matrix of traction and steering capabilities and the determined global forces. The third aspect of the disclosure may seek to automate the process of predictive traction control for vehicles, addressing inefficiencies in manual and reactive control methods. A technical benefit may include increasing precision and efficiency in vehicle handling and performance through automated, predictive adjustments.

According to a fourth aspect of the disclosure, a computer program product comprising program code for performing, when executed by the processing circuitry, the method of third aspect of the disclosure. A technical benefit may include facilitating easy deployment and updating of traction control capabilities across various vehicle platforms without requiring hardware changes.

According to a fifth aspect of the disclosure, a non-transitory computer-readable storage medium comprising instructions, which when executed by the processing circuitry, cause the processing circuitry to perform the method of the third aspect of the disclosure. A technical benefit may include providing a cost-effective solution for upgrading traction control systems, ensuring vehicles can benefit from the latest advances in predictive control technology.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary view of a vehicle according to an example.
**FIGS. 2A-B** are exemplary views of vehicles according to examples.
**FIGS. 3A-B** are schematical views of a vehicle travelling on a road according to examples.
**FIGS. 4** is an exemplary system diagram of a computer system according to an example.
**FIG. 5** is another view of **FIG. 4****,** according to an example.
**FIGS. 6A-B**are flow charts of exemplary methods for predictive traction control of a vehicle according to examples.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

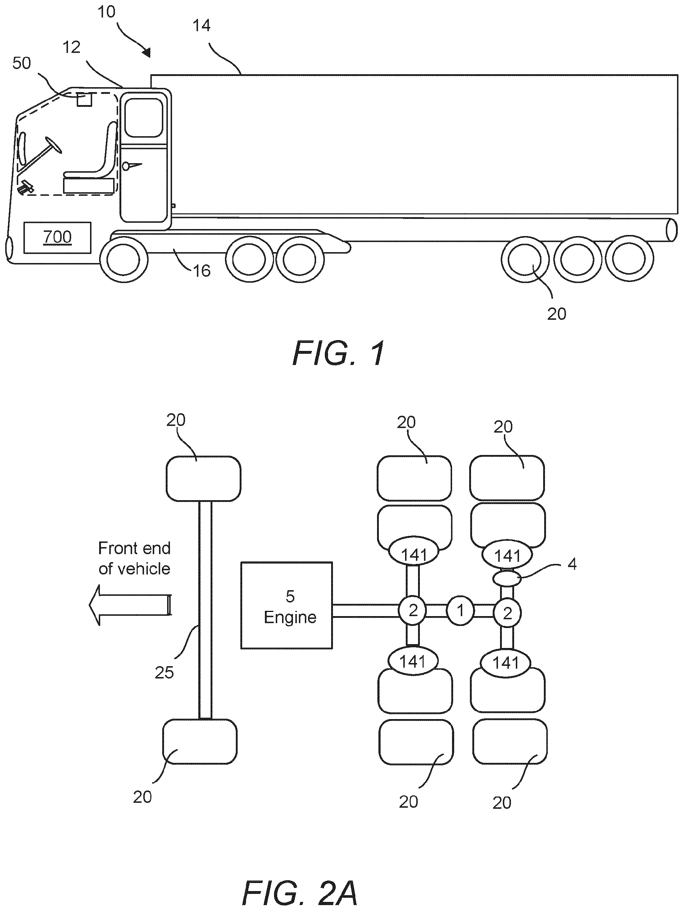

**FIG. 1** illustrates a vehicle **10.** The vehicle **10** is illustrated as a heavy-duty vehicle, but other vehicle types may be used. This particular example comprises a tractor unit **12** which is arranged to tow a trailer unit **14.** The vehicle combination **10** may of course also comprise additional vehicle units, such as one or more dolly units and more than one trailer unit. Although the vehicle is illustrated as a tractor unit, it should be realized that other types of vehicles may be equally considered for the purpose of the herein described method such as busses, construction equipment, trucks, light-weight trucks, articulated haulers, excavators, wheel loaders, and backhoe loaders etc. More specifically, the vehicles **10** benefitting from this inventive concept may be vehicles of a construction site, mining site and timber/forest operations. The vehicle **10** comprises vehicle units and associated functionality as would be understood and expected by a skilled person, such as a powertrain, chassis, and various control systems.

The tractor **12** may comprise a vehicle control unit (VCU) arranged to control various functions of the vehicle **10.** For instance, the VCU may be arranged to perform a vehicle motion management (VMM) function comprising control of wheel slip, vehicle unit stability, and so on. The trailer unit **12** optionally also comprises a VCU, which then controls one or more functions on the trailer **12.** The VCU or VCUs may be communicatively coupled, e.g., via wireless link, to a remote server. This remote server may be arranged to perform various configurations of the ECU, and to provide various forms of data to the ECU, such as for example providing data regarding the make and type of tires mounted on the vehicle **10.** In the following, all control units, including vehicle control unit(s) will hereinafter be referred to as a computer system **900.**

The vehicle **10** is supported by wheels **20,** where each wheel comprises a tire. The tractor unit **12** has front wheels which are normally steered, and rear wheels of which at least one pair are driven wheels. Generally, the rear wheels of the tractor **12** may be mounted on tag or pusher axles. A tag axle is where the rear-most drive axle is non-powered, also referred to as a free-rolling or dead axle. A pusher axle is where the forward-most drive axle is not powered. The trailer unit **14** is supported on trailer wheels **20.** Trailers with driven wheels, and even a steered axle, are also possible.

One of the rear axles and/or one of the axles on the trailer **14** may be a liftable axle. A lift axle, also known as a retractable axle, is an axle which can be raised so that its tires are not touching the road surface. This improves fuel economy and reduces maintenance and tire wear. It may also reduce or increase dynamic stability features of the vehicle and it can increase or decrease road wear depending on vehicle load, which axles that are lifted and in which driving situation the axle is lifted. One or more of the wheels may also be mounted with an active suspension which may be controlled by the computer system **900** e.g., in order to adjust a normal force of one or more tires.

The vehicle **10** may comprise a plurality of sensors **50.** The sensor **50** may be a camera, a lidar sensor, a radar sensor, an ultrasonic sensor or an infrared sensor. The sensors **50** may be configured to sense the surroundings of the vehicle **10.** The range and responsiveness of the sensors **50** may depend on sensor type, sensor location, lens type, image sensor resolution, lighting conditions, ambient conditions (e.g., weather, humidity, fogginess), conditions of electronic components, potential obstructions in the field of view, latencies in computer systems, etc. The sensors may be arranged at different parts of the vehicle, such as for example on the tractor unit **12** and/or on the wheel portion **16.**

In some examples, the sensor **50** is a smart sensor configured to process sensed information and make a detection decision related to a detection of an object. The smart sensor may comprise a microcontroller, processor (e.g. PLC, CPU, DSP), FPGA, ASIC or any other suitable digital and/or analog circuitry capable of processing sensing data. The smart sensor may further comprise a memory implemented in any known memory technology, including but not limited to E(E)PROM, S(D)RAM or flash memory. The memory may be integrated with or internal to the microcontroller/processor/circuitry.

In other examples, the sensor **50** is a sensor not capable of processing information itself. Unlike smart sensors, which have built-in processing capabilities to interpret and analyze data, "dumb" sensors or "passive" sensors are devices that detect and measure physical properties or phenomena without any processing or interpretation of the sensing data being collected. These sensors typically generate raw analog or digital signals that need to be processed by external systems or devices to derive meaningful information or insights.

The sensor **50** may be operatively connected (e.g., wired or wirelessly) to suitable devices, systems and features of the vehicle **10.** The wireless interface and associated communication protocols may be based on any known communication technology known in the art, such as one or more of HTTP(S), TCP/IP, UDP, FTP, SMTP, DNS, DHCP, SSH, POP3, SCP, NFS, SFTP, ICMP, ARP, RTP, RTCP, IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, any form of proximity-based device-to-device radio communication, LTE Direct, W-CDMA/HSPA, GSM, UTRAN, LTE, IPv4, IPv6, 6LoWPAN, IrDA, or 5G NR.

The vehicle **10** is equipped with a predictive electrically controlled suspension system. The vehicle **10** comprises multiple axles and wheels, which preferably each are managed by electronically controlled suspension (ECS) systems. The ECS-system is an advanced mechanisms that automatically adjust the suspension settings to optimize ride comfort, stability, and handling. Unlike traditional suspension systems, which have fixed settings, ECS systems can adapt in real-time to changing road conditions and driving dynamics. The suspension is adjusted by for example having adjustable dampers and air springs. Adjustable dampers can change the stiffness of the suspension, providing a softer ride on smooth roads and a firmer setup on rough terrain or during aggressive driving maneuvers. Air springs can alter the vehicle's ride height, improving aerodynamics or ground clearance as needed.

ECS system may control the air volume within the bellows to control the axle loads between the two rear driven axles. The ECS system may also control the air bellows in order to adjust the height of the vehicle or of individual axles. The ECS system may also be equipped with height measuring means for measuring the present height of an axle or axle pair. The height measuring means may be a potentiometer positioned on the chassis operated by a linkage connected to the axle, in this way, the change in height can be detected and this value is used to calculate the chassis height.

In one prior art system, the ECS-system has two modes: normal mode and maximum traction mode. The maximum traction mode may in prior art systems be activated through a switch on dashboard by driver. In a normal mode, the vertical loads are maintained equal on driven wheels, whereas for maximum traction mode, the loads are redistributed such that single axle have maximum vertical load. Alternatively, tag or pusher axle (non-driven axles) can be lifted to improve vertical loads on driven axles. Increasing vertical loads on drive axle to improve traction can lead to reduced vertical load on steering axle (front axle) and thus limits steering capabilities. In one example, the vehicle 10 has two driven wheel axles, and one front wheel axle. The driven wheel axles may comprise differentials with differential locks. The differential locks may be adapted to be activated and deactivated.

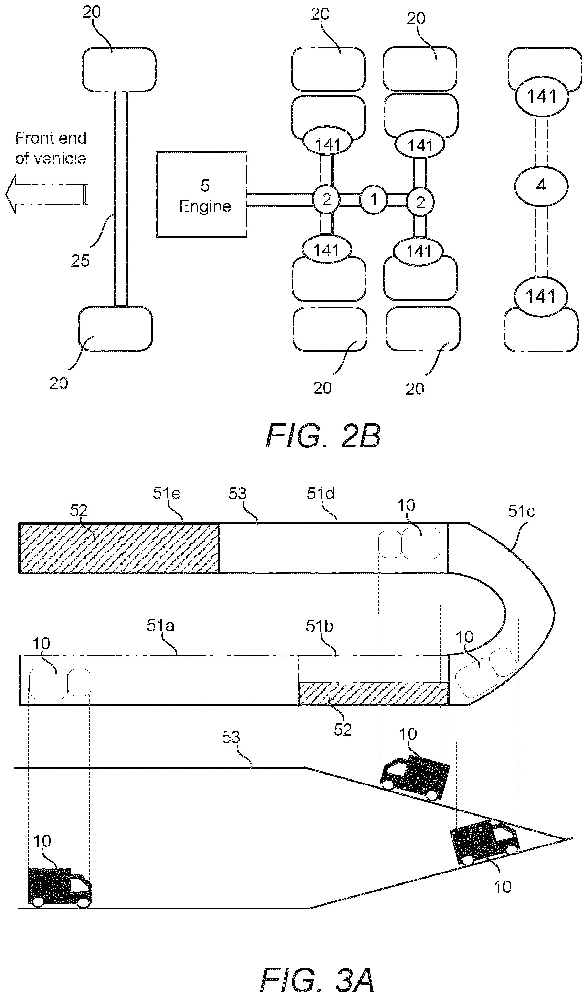

**FIGS. 2A-B** show top views of two different wheel configurations according to some examples. **FIG. 2A** shows a vehicle having an 6x4 configuration. The vehicle has a front pair **25** of wheels, an engine **5** an inter-axle lock (IAL), and two inter-wheel locks (IWL) which enable the selective engagement and disengagement of differentials. Each rear axle is provided with an electronically controlled air suspension **141.** The vehicle may be arranged with at least one lift bellow **4.** Lift bellows enable the lifting of non-driven axles. This feature improves vertical loads on driven axles, enhancing traction and reducing tire wear. By lifting axles when they are not needed, the system also improves fuel efficiency and reduces overall vehicle weight. **FIG. 2B** shows a vehicle having an 8x4 configuration. It should be noted that the inventive aspects are applicable for any tractor/truck that has at least two rear axles with electronically controlled air suspension and/or at least one differential (example 6x4.8x4, etc.). As will soon be described more in detail, the inventive aspects relates to centralized predictive control system to automize locking and/or unlocking of differentials and/or axle load distribution/lift axles using electronically controlled air suspension in an early stage to improve traction. In other words, one aim is to create a centralized predictive control system designed to automate the locking and unlocking of differentials and manage axle load distribution and lift axles using electronically controlled air suspension at an early stage to improve traction.

**FIG. 3A** is a schematic illustration of a vehicle **10** travelling along a road having a plurality of interconnected road sections **51a-e.** The different road sections **51a-e** may have different road conditions and/or road profiles. In this example, the first road section **51a** is a straight road with a low friction, the second road section **51b** is an uphill slope with a split friction (a road condition that occurs when the friction significantly differs between the left and the right wheelpath), the third road section **51c** is an uphill slope with a turn and low friction, the fourth section **51d** is an uphill slope with a low friction, and the fifth section **51e** is a straight road with high friction. All road segments that the vehicle has not yet passed are hereinafter referred to as an upcoming road section **53.**

On some road conditions, the road-wheel interaction capability (friction times vertical load) decreases either due to reduced vertical load or due to low friction. Reduced vertical load can for example be due to road profile, longitudinal weight transfer, lateral weight transfer and/or lateral axle scrubbing effect.

With open differentials, the wheels with least resistance or road-wheel interaction capability starts to spin which cause the whole axle group to lose traction. It can be dangerous to lose traction on such roads, as the truck can slide back, and the driver won't have any control over the sliding truck. Also, locked differentials can improve traction but affect handling which can lead to vehicle going out of curve.

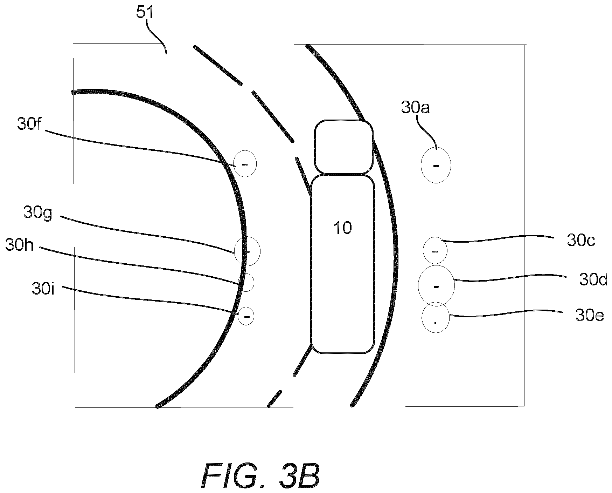

**FIG. 3B** is a schematic illustration of a vehicle **10** travelling along a road **51.** The vehicle **10** on the road **51** is going uphill with a turn with low friction. In this specific example, the vehicle is a 8x4 truck **10.** The circles **30a-f** represents friction circles for each wheel on its side. The first circles **30a, 30f** arranged on each side of the front part of the vehicle represents friction circle for the front axle. The circles **30c, 30g** represents the friction circle of the second axle. The circles **30d, 30h** represents the friction circle of the third axle. In this example, the second and third axle are driven axles. The circles **30e, 30i** represents the friction circle of the fourth axle. In this example, the fourth axle is a tag axle which has steering but no drive.

In this example, the inner wheel of the third axle **30h** has the least vertical load, i.e. the smallest radius of friction circle. Most of the friction circle **30h** is utilized by lateral force, thus any longitudinal force request on that wheel will result in wheel slip. Different actions **150** could be performed by the vehicle to account for these circumstances. One suitable action can be to lock the interwheel differential on that axle, but the longitudinal force might not be sufficient to climb uphill. Another suitable action can be adding load on the drive axle by lifting the tag axle, but it will likely result in reduced steering capability. The most suitable action might be to add increase vertical load on drive axle by distributing load (not completely lift) from the tag axle such that it can still contribute to steering enough to complete the curve.

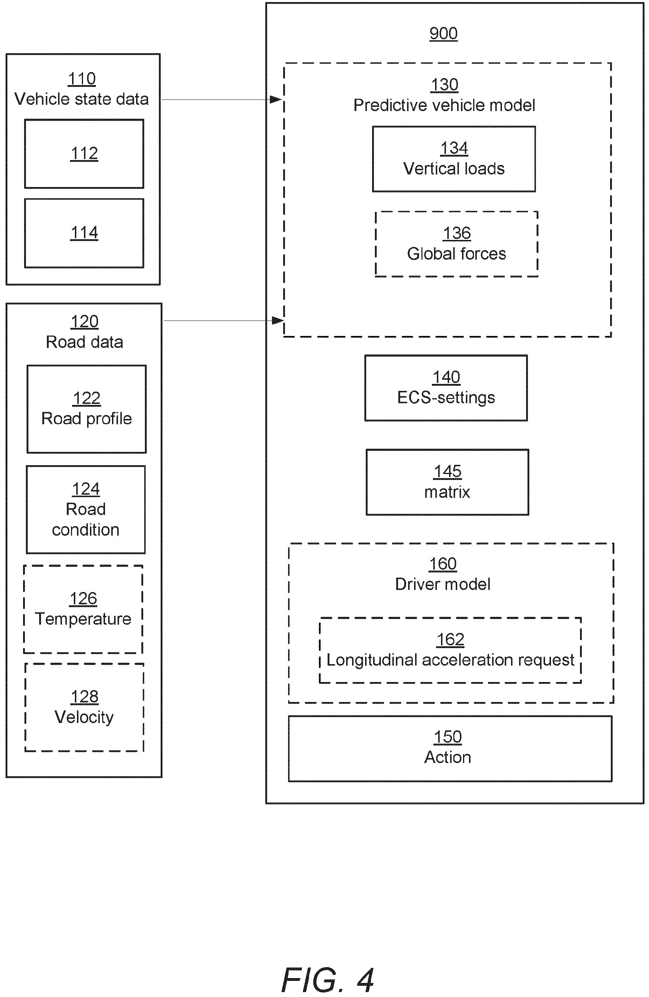

Turning to **FIG. 4****,** a computer system **900** is shown. The computer system **900** is configured to generate predictive traction control of a vehicle **10.** As previously described, the vehicle is comprising at least two rear axles with electronically controlled air suspension. In the below, the prediction horizon could be different. The system may be configured to optimize traction and steering capabilities, adapting dynamically to varying road conditions. This configuration enables the vehicle to maintain stability and control, ensuring enhanced performance and safety across diverse driving environments.

In one example, prediction horizon is between 5-15 seconds or 25-75 meters. However, it should be noted that other prediction horizons also are possible. The prediction horizon could also be seen as the road section which the vehicle is intending to travel on. In one example the prediction is made on a horizon of 5- 15 seconds and/or 25 - 75 meters. In one example, the prediction horizon is 50 meters. The road section which the vehicle is intending to travel on may be determined in time (such as for example seconds or minutes) and/or in distance (such as for example centimeters or meters). In one example the road section which the vehicle is intending to travel is in a predetermined time horizon. In one example the road section which the vehicle is intending to travel is in a predetermined distance horizon. In one example, a plurality of different prediction horizon could be used.

The computer system is configured to obtain or acquire vehicle state data **110.** Vehicle state data **110** may include various parameters about the current condition of the vehicle **10.** It can for example encompass speed, load distribution, tire pressure and wheel alignment. In one example the vehicle state data **110** comprises velocity data.

The vehicle state data **110** may further be based on historical data. The vehicle state data **110** may further be determined using algorithms that processes sensor data. The vehicle state data **110** may further include analyzing driving patterns. The vehicle state data **110** may be used to predict how the vehicle **10** will respond to upcoming road conditions. In one example, the vehicle state data **110** comprises information on upcoming state data that is predicted to occur during the prediction horizon.

The vehicle state data **110** may be obtained from one or more sensors. The one or more sensor may for example be accelerometer(s), gyroscope(s), and/or load sensor(s). The one or more sensors may further be a tire pressure monitoring sensor or system.

The computer system is configured to obtain or acquire road data **120.** Road data **120** may provide information about the upcoming road section **53.** In one example, the road data **120** further provides information about the road section which the vehicle is currently travelling on and/or the road section which the vehicle has been travelling on. The road data **120** may further provide information about the road section which the vehicle is intending to travel on, i.e. the road that is to be travelled by the vehicle. Road data **120** may provide information of the road on a target road area that is ahead of the vehicle in a driving direction of the vehicle. Road data **120** could be both static and dynamical data.

The road data **120** may for example relate to road profile **122.** The road profile **122** may relate to the road inclination. The road inclination may comprise information of upcoming changes in inclination of the road, for example if the inclination will be negative or positive, the maximum amount of inclination, a mean value of the inclination and/or the length of the inclination. The road profile **122** may also relate to the size of the road, the shape of the road and curvature of the road. In one example, the road profile is for example a straight road, roundabout, uphill slope, or uphill slope with turn.

The road profile **122** is preferably received from a navigation service. The road profile may be received from vehicle-to-vehicle communication that shares real-time road data.

The road data **120** may comprise information relating to the road condition or road surface details **124.** The road condition may relate to the surface of the road. The surface of the road may for example relate to the road surface roughness and/or road surface classification (gravel road, dirt road, asphalt road, etc.) of the road. The road surface may be uneven for many reasons, for example due to eroding roads, potholes, gravel road, dirt road, large water puddles on the road, ice and snow on the road, or oil spill on the road. The road surface details **124** may relate to friction and rolling resistance. The road surface information **124** is preferably received from a navigation service. The road surface information **124** may additionally or alternatively be received from one or more sensors arranged on the vehicle **10.** The road condition may be received from vehicle-to-vehicle communication that shares real-time road information.

Road data **120** may comprise information relating to the temperature **126** of the road. The temperature **126** of the road preferably relates to temperature at a given location that the vehicle **10** has travelled, the current temperature of the road which the vehicle is currently travelling, and/or the temperature on the upcoming road segment. The temperature may be received from a weather forecast and/or a temperature sensor arranged on the vehicle **10.** The temperature may be received from vehicle-to-vehicle communication that shares real-time information.

Road data **120** may further comprise information relating to velocity **128** for the road. The velocity may be reference velocity **128** or a target velocity **128** for the road. Reference velocity refers to the speed at which the vehicle is expected to travel under ideal conditions for a given road segment. Target velocity, on the other hand, is the desired speed the vehicle aims to maintain, taking into account factors such as road conditions and traffic. Incorporating these velocities into the computer system allows for more accurate predictions of vehicle behavior. For instance, by knowing the reference velocity, the system can anticipate changes in speed due to upcoming curves or inclines. The velocity of the road may be part of the previously mentioned vehicle state data **110.**

The target velocity **128** can be influenced by external data sources such as navigation systems or real-time traffic updates. By integrating this data, the computer system can dynamically adapt to varying conditions, ensuring the vehicle maintains stability while meeting desired performance targets. Overall, the inclusion of reference and target velocities may enhance the system's ability to predict and respond to road conditions, contributing to a safer and more efficient driving experience. The velocity of the road may be part of the previously mentioned vehicle state data **110.**

The road data **120** may further comprise information relating to friction **129.** Friction can be classified as high friction surface (for example dry asphalt), low friction surface (for example snow, mud or gravel) or split friction surface (when left and right wheels of vehicle have different friction underneath). Friction **129** may be a component in determining how the vehicle interacts with the road surface. It provides insights into the grip available for traction and steering. Friction estimators can be arranged on the vehicle, such as tire pressure sensors, accelerometers, and wheel speed sensors, and may gather data to assess friction levels. These sensors can detect variations in road texture, moisture, and other factors that affect grip. By analyzing this data, the computer system can estimate the coefficient of friction for different road segments. This friction estimation/determination may be important for predicting how the vehicle will perform under varying conditions, such as wet or icy roads. Friction estimation **129** may be a part of previously mentioned road condition **124.**

In one example the road data **120** comprises information relating to the slope of the road, the curvature of the road as well as information relation to the road surface (such as friction and rolling resistance).

The road data **120** may be obtained from ADASIS, cameras, or sensors mounted on the vehicle **10** or arranged in operative communication with the vehicle **10.** Moreover, GPS systems may provide geographical information to the vehicle **10.** The road information data **120** can also be obtained from recorded road information, or data from vehicles traveling ahead.

Alternatively, a methodical approach can be used to gather data on slope, curvature, and friction. In a first step, cameras or sensors mounted on the vehicle can provide information such as road limits, surface types like snow, mud, or asphalt, and an approximate slope percentage. These sensors may capture real-time data. In a second step, driver history data, including acceleration pedal rate and steering wheel rate, may be utilized alongside the current rate to predict approximate slope and curvature. This historical data helps forecast how the vehicle will need to adapt to changes in the road's gradient and turns, ensuring smooth and safe navigation. The indented curvature path, derived from the driver's past steering behavior, offers additional insights into potential future maneuvers.

The computer system is further configured to predict vertical loads **134** on at least one wheel and/or an axle of the vehicle. This prediction is at least based on vehicle state data **110** and road data **120.** Predicting these loads may help in adjusting the vehicle's suspension settings to optimize performance. By accurately predicting vertical loads, the system can enhance vehicle stability and performance, ensuring optimal traction and steering across diverse driving conditions. Vertical loads may refer to the forces exerted vertically on the wheels and/or axles, impacting traction and handling. Vertical loads can vary due to several reasons, for example vary due to acceleration, braking, and variations in the road profile **122.**

In one example, the vertical loads **134** are predicted using a predictive vehicle model **130.** This model can simulate how loads will shift based on for example changes in speed, road condition, and vehicle dynamics. Real-time data from for example GPS and weather forecasts can further refine these predictions. The predictive vehicle model **130** is preferably based on the current vehicle state data **110** and the road data **120.** In one example, the predictive vehicle model **130** uses real-time vehicle dynamics data to predict the vertical loads.

In one example, the computer system is further configured to predict the global forces **136** that are required for the upcoming road section **53** that the vehicle intends to travel during the prediction horizon. In one example, the global forces are determined based on at least the road data **120.** In one example, the global forces are determined based at least on a longitudinal acceleration request **162.** The longitudinal acceleration request **162** may be a predictive value. In one example, the global forces are determined based on at least the road data **120** and the longitudinal acceleration request **162.** Additionally or alternatively, the global forces **136** are determined based on real-time vehicle dynamics data.

In one example, the global forces **136** are determined by the predictive vehicle model **130.**

In one example, the computer system is further configured to predict a longitudinal acceleration request **162.** The longitudinal acceleration request **162** may be predicted over a prediction horizon. The longitudinal acceleration request **162** may be predicted for an upcoming road section **53.** The prediction may be based on current vehicle state data **110** and road data **120.** In one example, the prediction of the longitudinal acceleration request **162** is based on velocity. In one example, the prediction of the longitudinal acceleration request **162** is based on reference velocity, current vehicle velocity and steering wheel angle request of the vehicle.

In one example, the computer system **900** may further obtain or receive a driver model **160.** In one example, the driver model **160** is configured to predict the longitudinal acceleration request **162.** The driver model **160** may form part of the predictive vehicle model **130.** The driver model **160** may be a simple speed controller and path follower. The driver model **160** may predict longitudinal acceleration request by considering reference velocity and current vehicle velocity and steering wheel angle request for the target/predicted road.

In one example, the required global forces **136** is calculated for the target road (i.e. during the prediction horizon) using the predicted acceleration, steering wheel request and the road inputs. In one example, the powertrain capabilities for the current/reference speed are calculated. In some examples, the predicted longitudinal forces are limited based on powertrain capabilities. In one example, the computer system is configured to predict vertical loads on each wheel and/or axle based on road profile and predicted acceleration request.

The computer system is further configured to determine a plurality of possible electronically controlled suspension (ECS) settings **140** of the vehicle **10.** The electronically controlled suspension settings **140** are aimed at providing different approaches to axle load distribution. These settings **140** may involve adjusting the suspension components to optimize load distribution and vehicle stability. The ECS settings **140** can be tailored to various driving conditions, such as for example rough terrain, smooth highways, or icy roads. The computer system may evaluate multiple ECS settings **140** to find the best configuration for the current and predicted conditions. The ECS settings **140** may involves adjusting parameters like damping rates, spring stiffness, and ride height. By determining a plurality of ECS settings **140,** the system ensures the vehicle can handle diverse scenarios effectively, improving safety and comfort for passengers.

In one example, the plurality of possible ECS-settings **140** each describe different approach to axle load distribution. The approaches to axle load distribution may be based on predefined static loads for each wheel.

The computer system **900** is further configured to determine a matrix **145** of traction and steering capabilities for the plurality of ECS-settings **140.** This matrix **145** serves as a comprehensive framework that evaluates how different suspension configurations affect vehicle performance. The computer system may for example process vehicle state data **110** and/or road data **120** to predict how different ECS settings **140** will impact vehicle behavior.

The determination of this matrix **145** may be based on predicted vertical loads **134** and road data **120.** In one example, the matrix **145** may integrate data from various sensors that monitor wheel slip, steering angle, and/or tire grip. By assessing these parameters, the system can predict how changes in ECS settings will impact traction and steering under different conditions. This may involve analyzing how vertical loads distribute across the wheels and how they interact with the road surface.

In one example, the determination of the matrix **145** is based on road curvature, surface type, and predicted vertical loads **134.**

The matrix **145** allows the system to simulate multiple scenarios, such as cornering on wet roads or accelerating on gravel. Each ECS setting may be evaluated for its ability to maintain optimal contact between the tires and the road, ensuring the vehicle remains stable and responsive. By leveraging this matrix, the system can select the most effective ECS setting for any given condition, enhancing overall vehicle safety and performance. This dynamic adjustment helps maintain control and comfort, regardless of the driving environment. By analyzing the matrix **145,** the system can predict how different configurations will affect the vehicle's performance under specific conditions. For example, this includes assessing the need for adjustments in load distribution, damping rates, and ride height

In one example, the matrix **145** may be continuously updated. The matrix may be updated based on real-time vehicle dynamics data. By dynamically adjusting to the matrix's insights, the system can preemptively adapt to changes in the driving environment. This results in a smoother, safer driving experience, as the vehicle remains balanced and responsive to driver inputs and road conditions.

The computer system **900** is further configured to determine a suitable action **150** for the vehicle **10.** The suitable action **150** is to be carried out by the vehicle **10** in order to achieve a balance between traction and steering capabilities for the upcoming road section **53.** The action aims at achieving a balance between traction and steering capabilities for the upcoming road section **53.** This determination helps in choosing settings that enhance traction and steering capabilities while minimizing wear on suspension components.

In one example, the action is determined by using the matrix **145** of traction and steering capabilities. In one example, the action is further determined using the determined global forces **136.**

The action **150** may involve selecting the optimal ECS settings **140** and possibly also adjusting other vehicle parameters to ensure stability and control. The action **150** may aim at balancing traction and steering capabilities for the upcoming road section. In one example, the action may include adjusting ECS settings **140,** selecting axle loads, and/or optimizing energy use. In one example, the action **150** is an action aimed at preventing wheel slip. In one example, the action **150** comprises redistributing axle load.

In one example, the action **150** includes automatically adjusting the ECS settings **140.** In one example, this is performed prior to the vehicle **10** reaching the upcoming road section **53** to ensure optimal traction and steering. In other words, the action **150** may include adjusting the ECS settings **140** in a time frame prior to the prediction horizon.

In one example, the action **150** comprises causing a mechanism of the vehicle **10** to lift non-driven axles. In one example, the action **150** comprises causing a differential lock mechanism to selectively engage or disengage differentials of the vehicle.

In one example, the action **150** comprises selecting optimum loads on axles of the vehicle **10.** In one example, the optimum loads on axles are specified for each determined ECS settings **140.** In one example, the action **150** further comprises selecting suitable locking an unlocking of differentials of the vehicle.

The determination of a suitable action may be based on several factors. In one example, the determination of an suitable action uses input such as road curvature, surface type, and predicted vertical loads **134.** The system may then determine the most suitable ECS settings, for example to maintain tire grip and steering precision. The selected action **150** allows the vehicle to effectively navigate bends, inclines, and variable surfaces without compromising safety. In one example, the aim is to initiate the action in a very early stage.

In one example, the step of determining the suitable action **150** using the matrix **145** further comprises determining the optimal action by analyzing energy use, wear of components of the vehicle or a combination of both. The wear of components may for example be wear of tire wear and/or actuator wear. In one example, the step of determining the optimal action is performed where multiple ECS-settings **140** are considered suitable.

In one example, determining the action **150** comprises optimizing energy use when multiple ECS-settings **140** achieve a desired balance between traction and steering capabilities.

In one example, the computer system **900** is further configured to control the vehicle to carry out the determined suitable action **150.**

In one example, the computer system **900** is further configured transmit information to a user of the vehicle **10** regarding the determined action **150.** In one example, the information comprises information of the determined action **150** upon when the system has controlled the vehicle to carry out the action **150.** In one example, the information comprises information of the determined action **150** for the user of the vehicle **10** to determine if he/she wants to proceed with the suggested suitable action **150.** The information may be transmitted to the user via a user-interface in the vehicle.

In one example the computer system **900** obtain road data **120,** reference velocity and estimated friction. The estimated friction may be received from estimators present on the vehicle **10.** The computer system **900** further obtain or generates vehicle dynamic equations.

In one example, the ECS-settings **140** comprises actuator settings. Different actuator settings may be locking/unlocking of the differentials and/or changing of axle loads using electronically controlled suspension by selecting one of the breakpoints. In one example, the actuator capabilities are calculated for different actuator settings based on vertical loads and friction input. The different actuator settings may be used to determine or calculate a matrix with maximum traction and steering capabilities for different breakpoints and differential lock combination. In one example, with the required global force for a target road (i.e. a road the vehicle intends to travel during a prediction horizon), the computer system **900** selects the best possible actuator setting to maintain the road curvature and reference velocity based on above traction and steering capabilities matrix. After selection of the actuator setting, the computer system may send out a vector of the actuator settings for inter-axle differential lock, inter-wheel differential lock and/or electronically controlled suspension request to the control allocation block (this may be referred to as a decision stage). This vector creates a matrix.

Based on the input from prediction stage, the computer system **900** decides a suitable action **150** immediately before reaching areas where there are possibilities of wheel spin. The actions **150** may be locking/unlocking interaxle differentials, inter wheel differentials, using existing traction control function, using vehicle's inertia (i.e., no action) or selecting optimum loads on axle using ECS breakpoints. The action **150** may include switching hysteresis to avoid fluctuations in output from controller. The action **150** may also include minimum amount of time the actuator should be in the current state so that the settings is not changed every second (longer time for ECS). In summary, the model is running ahead of the real vehicle to cover next time horizon and outputs preferred actuator setting to maximize traction. The prediction stage may take current states (longitudinal velocity, pitch velocity, pitch angle) from real vehicle to initialize the prediction model.

In one example, the ECS breakpoints (vertical load breakpoints) are created based on static loads. The number of breakpoints may depend on how much optimization that is required. Consider an example of a 6x4 vehicle with static loads as 5 tons on front axle, and 3 tons each on rear drive axles. If the number of breakpoints is considered as 5, the breakpoint table will be calculated as shown in below table. It should be mentioned that all loads mentioned below are in tons and is just one non-limiting example.

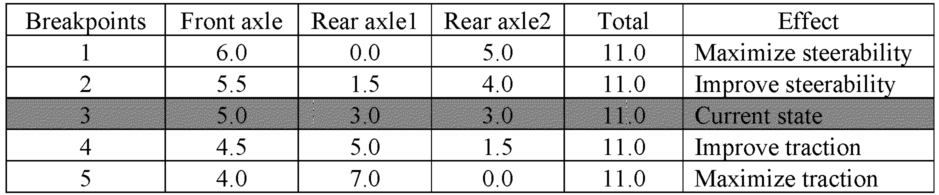

In one example, the computer system **900** is configured to perform three stages: ECS breakpoint, prediction stage and decision stage. In one example, the ECS breakpoint function takes static loads on each wheel as input and calculates different modes of ECS. In one example, the prediction stage uses upcoming road profile, surface data and ECS breakpoint modes. Over the prediction horizon, it calculates required longitudinal force, changes in vertical load on each wheel and maximum traction capability with differential lock and unlock condition for every ECS mode. It also calculates steering capabilities for each ECS mode and differential lock condition. In one example, the decision stage takes input from prediction stage (preferred differential setting and ECS mode to maximize traction) and takes required action. If multiple solutions exist, the decision stage uses optimization method based on energy required to provide a unique solution. The action **150** can be one of the following: Locking/unlocking interaxle differentials, inter wheel differentials, using existing traction control function, using vehicle's inertia (i.e., no action), axle load distribution using ECS, lifting dead axle to increase load on drive axles. Thus, with predictions, an optimum actuator can be selected way before than the vehicle reaches an obstacle. This also reduces dependency on drivers.

In one example, a method for predictive traction control of a vehicle comprising at least two rear axles with electronically controlled air suspension and optionally one or more differentials is provided. The method comprises acquiring road data relating to an upcoming road section as well as data relating to a current vehicle state. Based on the acquired data, the vertical loads on each wheel and axle and the global forces required for the upcoming road section are predicted using a predictive vehicle model. A plurality of possible ECS settings are determined, each describing a different approach to axle load distribution. A matrix of traction and steering capabilities is determined based on the predicted vertical loads and the acquired road data for each different ECS setting, optionally in combination with differential lock/unlock settings. Finally, a suitable action is determined using the matrix based on the predicted required global forces, before reaching the upcoming road section. Thereby, a balance between traction capabilities and steering capabilities is provided and predictive traction control achieved.

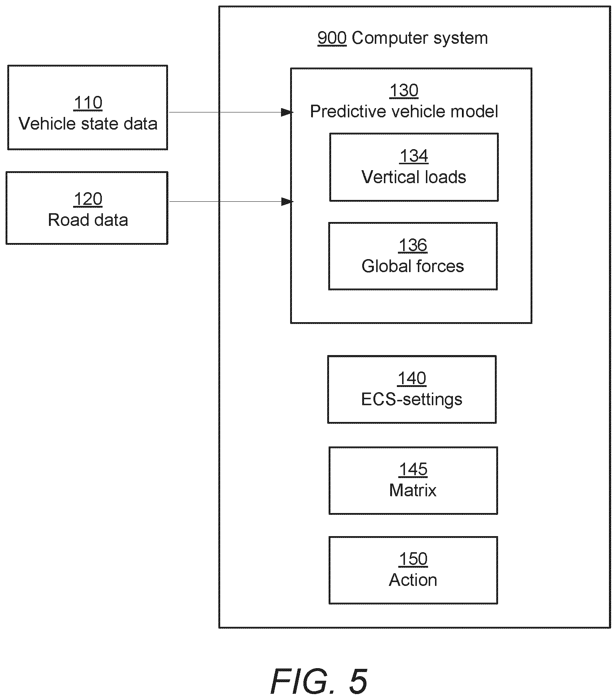

**FIG. 5** is another view of **FIG. 4****,** according to an example. A computer system for a vehicle **10,** comprising processing circuitry **902** configured to obtain current vehicle state data **110.** The processing circuitry **902** is configured to obtain road data **120.** The road data **120** is relating to an upcoming road section **53.** The road data **120** is relating to an upcoming road section **53** that the vehicle **10** intends to travel during a prediction horizon The processing circuitry **902** is further configured to predict vertical loads **134** on at least one wheel and/or axle of the vehicle. The prediction is based on the obtained vehicle state data **110** and road data **120.** The processing circuitry **902** is further configured to determine global forces **136** required for the upcoming road section.

The processing circuitry **902** is further configured to determine a plurality of possible electronically controlled suspension ECS settings **140,** and determine a matrix **145** of traction and steering capabilities for the plurality of ECS-settings **140.** The determination is at least based on the predicted vertical loads **134** and the road data **120.** The processing circuitry **902** is further configured to determine a suitable action **150** to be carried out by the vehicle **10** in order to achieve a balance between traction and steering capabilities for the upcoming road section **53,** wherein the determination is based on the matrix **145** of traction and steering capabilities. The determination is based on the matrix **145** of traction and steering capabilities and the determined global forces **136.**

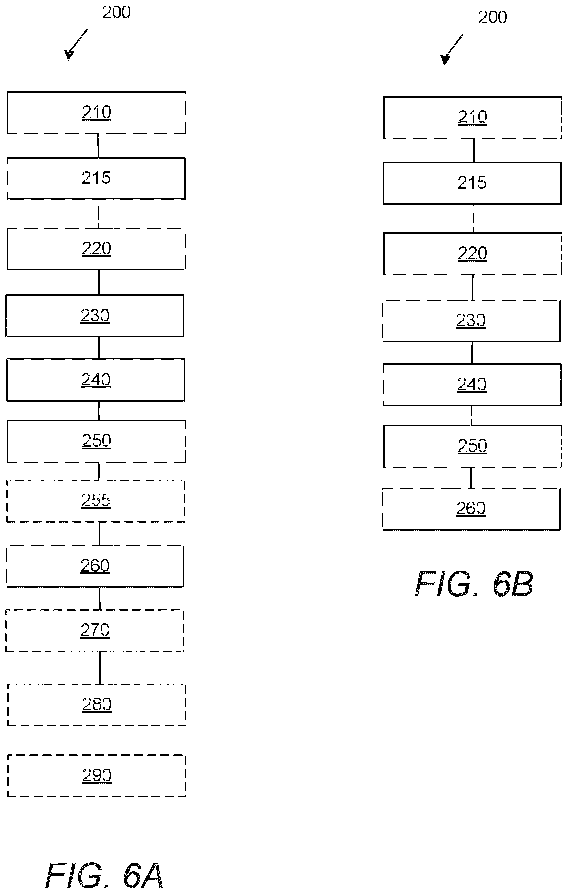

**FIG. 6A** is a flow chart of a method **200** for a vehicle according to an example. The method may involve a systematic approach to enhancing vehicle performance and safety through a series of data-driven steps performed by the processing circuitry of a computer system. The method includes obtaining **210** road data **120,** wherein this data pertains to an upcoming road section **53** that the vehicle **10** intends to travel during a prediction horizon. The road data **120** may comprise information relating to the road profile and road condition. The method further involves obtaining **215** current vehicle state data **110,** which provides real-time information on the vehicle's dynamics and operational status. The vehicle state data and road data **120** forms the basis for predicting **220** vertical loads **134** on at least one wheel and/or axle of the vehicle **10** for the upcoming road section **53.** This prediction is based on the combination of obtained vehicle state data **110** and road data **120,** enabling precise load management.

Following the prediction, the method determines **230** global forces **136** that are required for the vehicle to navigate the upcoming road section **53** during the prediction horizon. The method also involves determining **240** a plurality of possible electronically controlled suspension settings **140.** These settings are important for adjusting the vehicle's suspension to accommodate varying load distributions and road conditions. The method further comprises determining **250** a matrix of traction and steering capabilities for the plurality of ECS-settings **140.** This matrix may be derived from the predicted vertical loads **134** and road data **120,** providing a comprehensive view of how different settings affect the vehicle's performance. In one example, the method further comprises continuously updating **255** the matrix **145** of traction and steering capabilities in response to real-time data changes.

The method further includes determining **260** a suitable action **150** to be carried out by the vehicle **10** to achieve a balance between traction and steering capabilities for the upcoming road section **53.** This determination is based on analyzing the matrix **145** of traction and steering capabilities along with the determined global forces **136.** The chosen action may involve redistributing axle loads, preventing wheel slip, or adjusting the ECS settings to optimize performance.

In one example, the method further comprises determining **270** an optimal action. In one example, the method comprises determining an optimal action among a plurality of determined suitable actions. In one example, the method comprises prioritizing a plurality of determined suitable actions. The prioritization may be made on available data, such as global forces **136,** vehicle state data **110** and road data **120.** The prioriziation may further be made on energy usage, predicted upcoming energy usage and/or current energy usage.

In one example, the method further comprises transmitting **280** information regarding the determined action **150** to the vehicle user. This may enhance transparency and user engagement. The information may be transmitted to a user interface of the vehicle.

In one example, the method further comprises controlling **290** the control the vehicle to carry out the determined suitable action **150.**

**FIG. 6B** is a flow chart of a method for a vehicle according to an example. A computer-implemented method **200** for a vehicle is comprising obtaining **210,** by processing circuitry of a computer system, current vehicle state data and obtaining **215,** by processing circuitry of a computer system, road data, wherein the road data **120** is relating to an upcoming road section **53** that the vehicle **10** intends to travel during a prediction horizon. The method further comprises predicting **220,** by the processing circuitry, vertical loads on at least one wheel and/or axle using the obtained vehicle state data and road data. The method further comprises predicting **230,** by the processing circuitry, global forces **136** required for the upcoming road section **53** that the vehicle **10** intends to travel during the prediction horizon. The method further comprises determining **240,** by the processing circuitry, a plurality of possible electronically controlled suspension (ECS) settings and determining **250,** by the processing circuitry, a matrix of traction and steering capabilities for the plurality of ECS settings. The determination is at least based on the predicted vertical loads and the road data. The method further comprises determining **260,** by the processing circuitry, a suitable action to be carried out by the vehicle in order to achieve a balance between traction and steering capabilities for the upcoming road section.

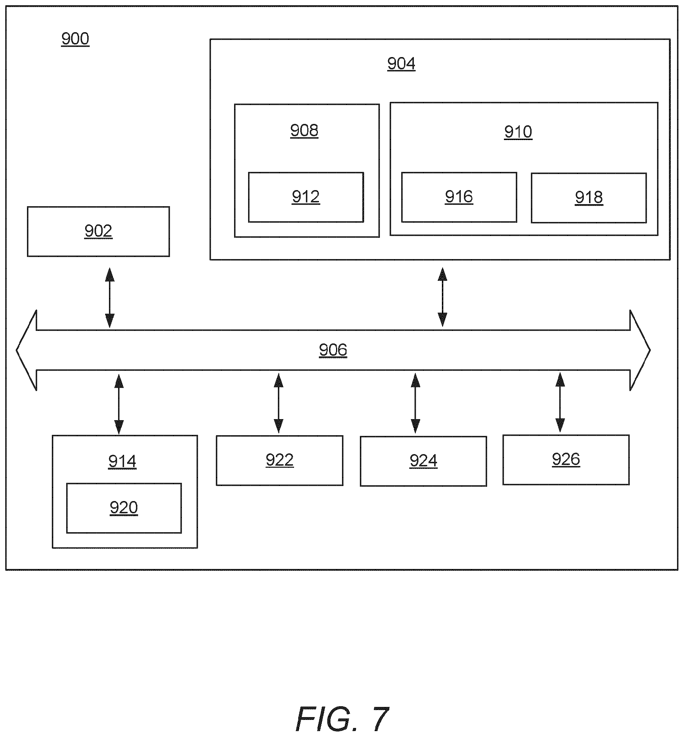

**FIG. 7** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device
interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured for predictive traction control of a vehicle comprising at least two rear axles with electronically controlled air suspension, the processing circuitry further being configured to: obtain current vehicle state data of the vehicle; obtain road data, wherein the road data is relating to an upcoming road section that the vehicle intends to travel during a prediction horizon; predict vertical loads on at least one wheel and/or axle of the vehicle for the upcoming road section that the vehicle intends to travel during the prediction horizon, wherein the prediction is based on the obtained vehicle state data and road data; determine global forces required for the upcoming road section that the vehicle intends to travel during the prediction horizon; determine a plurality of possible electronically controlled suspension settings; determine a matrix of traction and steering capabilities for the plurality of ECS-settings, wherein said determination is at least based on the predicted vertical loads and the road data, and determine a suitable action to be carried out by the vehicle in order to achieve a balance between traction and steering capabilities for the upcoming road section, wherein the determination is based on the matrix of traction and steering capabilities and the determined global forces.

Example 2: The computer system of Example 1, wherein the road data comprises information relating to the road profile and road condition of the upcoming road section.

Example 3: The computer system of any of Examples 1-2, wherein the vertical loads are predicted on each wheel and/or axle.

Example 4: The computer system of any of Examples 1-3, wherein the determination of global forces is at least based on the road data.

Example 5: The computer system of any of Examples 1-4, wherein the processing circuitry further is configured to: predict a longitudinal acceleration request for the upcoming road section during the prediction horizon, wherein said prediction is at least based on current vehicle state data and road data.

Example 6: The computer system of Example 5, wherein the prediction of the longitudinal acceleration request is obtained by a driver model.

Example 7: The computer system of any of Examples 5-6, wherein the determination of the global forces are at least based on the predicted longitudinal acceleration request.

Example 8: The computer system according to any preceding Examples, further comprising: continuously update the matrix of traction and steering capabilities.

Example 9: The computer system according to any preceding Examples, further comprising: transmitting information to a user of the vehicle regarding the determined action.

Example 10: The computer system according to any of the preceding Examples, wherein the step of determining the suitable action using the matrix further comprises determining the optimal action by analyzing energy use, wear of components of the vehicle or a combination of both.

Example 11: The computer system of any of Examples 1-10, wherein the plurality of possible ECS-settings each describe different approach to axle load distribution.

Example 12: The computer system according to any of the preceding Examples, wherein the road data is obtained through one or more of ADASIS, recorded road information, data from vehicles traveling ahead, cameras, or sensors mounted on the vehicle.

Example 13: The computer system according to any of the preceding Examples, further comprising selecting optimum loads on axles of the vehicle using the determined ECS settings.

Example 14: The computer system according to any of the preceding Examples, wherein the action comprises redistributing axle loads on at least one wheel and/or axle of the vehicle.

Example 15: The computer system according to any of the preceding Examples, wherein the action is aimed at preventing wheel slip of the vehicle.

Example 16: The computer system according to any of the preceding Examples, wherein the action comprises causing a mechanism of the vehicle to lift non-driven axles.

Example 17: A vehicle comprising the computer system of any of Examples 1-15.

Example 18: The vehicle of Example 17, further comprising: a differential lock mechanism configured to selectively engage or disengage differentials.

Example 19: A computer-implemented method for predictive traction control of a vehicle, comprising: obtaining, by processing circuitry of a computer system, road data, wherein the road data is relating to an upcoming road section that the vehicle intends to travel during a prediction horizon; obtaining, by processing circuitry of a computer system, current vehicle state data of the vehicle; predicting, by the processing circuitry, vertical loads on at least one wheel and/or axle of the vehicle for the upcoming road section that the vehicle intends to travel during the prediction horizon, wherein the prediction is based on the obtained vehicle state data and road data; determine, by the processing circuitry, global forces required for the upcoming road section that the vehicle intends to travel during the prediction horizon; determining, by the processing circuitry, a plurality of possible electronically controlled suspension settings; determining, by the processing circuitry, a matrix of traction and steering capabilities for the plurality of ECS-settings, wherein said determination is at least based on the predicted vertical loads and the road data; and determining, by the processing circuitry, a suitable action to be carried out by the vehicle in order to achieve a balance between traction and steering capabilities for the upcoming road section, wherein the determination is based on the matrix of traction and steering capabilities and the determined global forces.

Example 20: A computer program product comprising program code for performing, when executed by the processing circuitry, the method of Example 19.

Example 21: A non-transitory computer-readable storage medium comprising instructions, which when executed by the processing circuitry, cause the processing circuitry to perform the method of Example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (900) comprising processing circuitry (902) configured for predictive traction control of a vehicle (10) comprising at least two rear axles with electronically controlled air suspension, the processing circuitry further being configured to:
obtain current vehicle state data (110) of the vehicle (10);
obtain road data (120), wherein the road data (120) is relating to an upcoming road section (53) that the vehicle (10) intends to travel during a prediction horizon;
predict vertical loads (134) on at least one wheel and/or axle of the vehicle (10) for the upcoming road section (53) that the vehicle (10) intends to travel during the prediction horizon, wherein the prediction is based on the obtained vehicle state data (110) and road data (120);
determine global forces (136) required for the upcoming road section (53) that the vehicle (10) intends to travel during the prediction horizon;
determine a plurality of possible electronically controlled suspension (ECS) settings (140),
determine a matrix (145) of traction and steering capabilities for the plurality of ECS-settings (140), wherein said determination is at least based on the predicted vertical loads (134) and the road data (120), and
determine a suitable action (150) to be carried out by the vehicle (10) in order to achieve a balance between traction and steering capabilities for the upcoming road section (53), wherein the determination is based on the matrix (145) of traction and steering capabilities and the determined global forces (136).

2. The computer system of claim 1, wherein the road data (120) comprises information relating to the road profile (122) and road condition (124) of the upcoming road section (53).

3. The computer system of any of claims 1-2, wherein the vertical loads (130) are predicted on each wheel and/or axle.

4. The computer system of any of claims 1-3, wherein the determination of global forces (136) is at least based on the road data (120).

5. The computer system of any of claims 1-4, wherein the processing circuitry further is configured to:
predict a longitudinal acceleration request (162) for the upcoming road section (53) during the prediction horizon, wherein said prediction is at least based on current vehicle state data (110) and road data (120).

6. The computer system of claim 5, wherein the determination of the global forces (136) are at least based on the predicted longitudinal acceleration request (162).

7. The computer system according to any preceding claims, further comprising:
continuously update the matrix (145) of traction and steering capabilities.

8. The computer system according to any preceding claims, further comprising:
transmitting information to a user of the vehicle (10) regarding the determined action (150).

9. The computer system according to any of the preceding claims, wherein the step of determining the suitable action (150) using the matrix (145) further comprises determining the optimal action by analyzing energy use, wear of components of the vehicle or a combination of both.

10. The computer system according to any of the preceding claims, wherein the action (150) comprises redistributing axle loads on at least one wheel and/or axle of the vehicle (10).

11. A vehicle comprising the computer system of any of claims 1-10.

12. The vehicle of claim 16, further comprising: a differential lock mechanism configured to selectively engage or disengage differentials.

13. A computer-implemented method (200) for predictive traction control of a vehicle (10), comprising:
obtaining (210), by processing circuitry of a computer system, road data, wherein the road data (120) is relating to an upcoming road section (53) that the vehicle (10) intends to travel during a prediction horizon;
obtaining (215), by processing circuitry of a computer system, current vehicle state data of the vehicle (10)
predicting (220), by the processing circuitry, vertical loads (134) on at least one wheel and/or axle of the vehicle (10) for the upcoming road section (53) that the vehicle (10) intends to travel during the prediction horizon, wherein the prediction is based on the obtained vehicle state data (110) and road data (120);
determine (230), by the processing circuitry, global forces (136) required for the upcoming road section (53) that the vehicle (10) intends to travel during the prediction horizon;
determining (240), by the processing circuitry, a plurality of possible electronically controlled suspension (ECS) settings (140);
determining (250), by the processing circuitry, a matrix (145) of traction and steering capabilities for the plurality of ECS-settings (140), wherein said determination is at least based on the predicted vertical loads (134) and the road data (120); and
determining (260), by the processing circuitry, a suitable action (150) to be carried out by the vehicle (10) in order to achieve a balance between traction and steering capabilities for the upcoming road section (53), wherein the determination is based on the matrix (145) of traction and steering capabilities and the determined global forces (136).

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
